# EUROPÄISCHE PATENTSCHRIFT

(11) **EP 0 477 816 B1**
(45) Veröffentlichungstag und Bekanntmachung des Hinweises auf die Patenterteilung: **10.05.1995**
(21) Anmeldenummer: 91116133.9
(22) Anmeldetag: 23.09.1991
(51) Int. Cl.: B62D 9/00, B62D 7/14, B62D 5/12

(54) **Hydraulische Lenkung für Fahrzeugachsen**
Hydraulic steering for vehicle axles
Direction hydraulique pour essieux de véhicules

(30) Priorität: 24.09.1990 DE 4030155
(43) Veröffentlichungstag der Anmeldung: 01.04.1992
(73) Patentinhaber: Paul, Josef, D-94474 Vilshofen (DE)
(72) Erfinder: Paul, Josef, D-94474 Vilshofen (DE)
(74) Vertreter: Matschkur, Götz, Lindner Patent- und Rechtsanwälte

(56) Entgegenhaltungen:
- EP-A- 0 225 773
- DE-A- 2 312 565
- DE-C- 709 769
- US-A- 4 830 128

## Beschreibung

Die Erfindung bezieht sich auf eine hydraulische Lenkung, insbesondere für Vor- oder Nachlaufachsen von Lkws, mit einem zweikammerigen Geberzylinder, dessen Kolben an den Lenkstockhebel angeschlossen ist und dessen beide Kammern über Hydraulikleitungen mit den Kammern eines an der Lenkachse vorzugsweise kardanisch aufgehängten Nehmerzylinders vebunden sind, wobei der Nehmerzylinder einem der beiden Spurhebel der Lenkachse zugeordnet ist und die beiden Spurhebel über eine Spurstange miteinander verbunden sind und ein federbeaufschlagter Vorratsdruckspeicherr für Leckölverluste vorgesehen ist, der über Rückschlagventile mit dem Hydrauliksystem von Geber- und Nehmerzylinder verbunden ist.

Bei zwangsgelenkten Vor- oder Nachlaufachsen von Lkws ist bisher üblicherweise die Lenkung derart ausgebildet, daß vom Lenkstockhebel der Vorderachse aus eine zusätzliche mechanische Hebelverbindung für die Zusatzachse gelegt ist, um diese entsprechend dem jeweiligen Lenkeinschlag der unmittelbar gelenkten Vorderachse mit zu veschwenken. Gleichbekannte Systeme mit elektronisch gesteuerter Lenkkraft oder im weitestgehenden Sinne auch hydraulische Systeme finden jedoch bisher bei schnellaufenden Fahrzeugen wie Lkw und dergl. aus Sicherheitsgründen kaum Anerkennung, da diese außerordentlich aufwendig und störanfällig sind.

Zur Verringerung der Schwierigkeiten der meisten vorhandenen Systeme ist in der US-A-4830128 bereits eine hydraulische Lenkung der eingangs genannten Art nach dem Oberbegriff des Anspruchs 1 vorgeschlangen worden, wobei durch die Verkopplung von Geber- und Nehmerzylinder sich eine Verschiebung des Kolbens im Geberzylinder unmittelbar auf eine entsprechende Verschiebung des Kolbens im Nehmerzylinder auswirkt, die dann bei einer unmittelbaren Verschwenkung eines der Spurhebel herangezogen werden kann. Durch das Vorsehen des Vorratsdruckspeichers für Leckölverluste werden dabei Störungen verhindert, die durch unvermeidliche Druckabfälle bei ebensowenig vermeidbaren Leckölverlusten auftreten könnten, so daß ein hoher Sicherheitsstandard gewährleistet ist, wie er gerade bei so empfindlichen Sicherheitsfahrteilen, wie einer Lenkung der Zusatzachsen, von ganz entscheidender Bedeutung ist.

Der wesentliche Nachteil dieser bekannten Vorrichtung liegt darin, daß bei ihr bei etwaigen Störungen keine zwangsweise Rückstellung der Räder der Zusatzachse in die Geradeausstellung erfolgt, was aber für eine wirklich vollständige Absicherung unabdingbar ist, damit nicht ein unkontrollierbares Flattern oder Querstellen der Räder der Zusatzachse um die Geradeausfahstellung erfolgt, was zu erheblichen Instabilitäten im Fahrverhalten führen würde.

Der Erfindung liegt daher die Aufgabe zugrunde, eine hydraulische Lenkung der eingangs genannten Art so weiterzubilden, daß unter Vermeidung der Schwierigkeiten der bisher bekannten Systeme eine zwangsweise Rückstellung der Räder in die Geradeausfahrstellung bei einem Ausfall des Hydrauliksystems erfolgt, ohne daß die Rückstellfedern im normalen Lenkbetrieb mit betätigt werden müssen.

Zur Lösung dieser Aufgabe ist erfindungsgemäß vorgesehen, daß dem Nehmerzylinder und dem zwangsweise mitgelenkten zweiten Spurhebel jeweils ein Federspeicherzylinder zugeordnet ist, dessen unter Spiel mit dem Nehmerkolben beziehungsweise mit einem Verbindungsrohr zum zweiten Spurhebel gekoppelter Kolben unter der Wirkung einer Feder den Nehmerkolben oder das Verbindungsrohr in die Lenkungsmittelstellung verbringt, wenn der steuerbare Luftdruck abfällt, der im Betrieb den Kolben des Federspeicherzylinders in einer Stellung hält, in der aufgrund des Spiels der Nehmerkolben und das Verbindungsrohr unbeeinflußt verschiebbar sind.

Durch die Verkopplung von Geber- und Nehmerzylinder wirkt sich eine Verschiebung des Kolbens im Geberzylinder unmittelbar auf entsprechende Verschiebung des Kolbens im Nehmerzylinder aus, die dann bei einer unmittelbaren Verschwenkung eines der Spurhebel herangezogen werden kann. Dabei genügt es ersichtlich, daß nur einer der Spurhebel unmittelbar angesteuert wird, da der zweite Spurhebel sowieso über die Spurstange mit dem anderen Spurhebel gekoppelt ist und somit dessen Schwenkbewegung in gleicher Weise folgt. Durch das Vorsehen des Vorratsdruckspeichers für Leckölverluste werden dabei Störungen verhindert, die durch unvermeidliche Druckabfälle bei ebensowenig vermeidbaren Leckölverlusten auftreten könnten, so daß ein hoher Sicherheitsstandard gewährleistet ist, wie er gerade bei so empfindlichen Sicherheitsfahrteilen, wie einer Lenkung der Zusatzachsen, von ganz entscheidender Bedeutung ist. Dadurch, daß über Rückschlagventile der Auslgeich der Leckölverluste nicht nur auf einer Seite, sondern gleichzeitig auf beiden Seiten des Kolbens des Geberzylinders, und damit auch des Nehmerzylinders, erfolgt, wird beim Ausgleich der Leckölverluste jegliche dabei auftretende Verschiebung des Kolbens vermieden, so daß er steuerungsneutral bleibt.

Sobald der Luftdruck abfällt - sei es durch eine Störung im Federdruckspeicher selbst, sei es gesteuert von außen aufgrund entsprechender Sensoren, die eine andere Lenkstörung anzeigen und den Federspeicherzylinder entlüften - wird dessen Kolben durch die Vorspannfeder schlagartig in die Sicherungspostiion verbracht, in welcher er unter Mitnahme des Kolbens des Nehmerzylinders den mit diesem verbundenen Spurhebel in die Geradeausfahrstellung verbringt und unter der Wirkung der Kraft der Vorspannfeder auch hält.

Wenn - wie es eingangs als vorteilhaft beschrieben worden ist - nur einem der beiden Spurhebel der Lenkachse ein Nehmerzylinder zugeordnet ist, so ist in diesem Fall erfindungsgemäß der zweite Spurhebel mit Spiel mit der Kolbenstange eines gesonderten Federspeicherzylinders verbunden, durch den er in die Lenkungsmittelstellung verbringbar ist.

Dieses Vorsehen eines zweiten Federspeicherzylinders beruht darauf, daß der doppeltwirkende Nehmerzylinder zwar durch sowohl drückende als auch ziehende Betätigung des Spurhebels eine Lenkung in beiden Richtungen bewirken kann, daß aber ein Federspeicherzylinder nur in einer Richtung ziehend arbeiten kann, so daß er stets nur einen nach außen geschwenkten Spurhebel in die Mittelstellung zurückbringen kann, nicht aber einen nach innen eingeschwenkten. Dies wird dadurch ausgeglichen, daß zwei Federspeicherzylinder bei Vorsehen nur eines Nehmerzylinders vorhanden sind, von denen immer einer ziehend arbeiten kann.

Die spielbehaftete Verbindung des Kolbens des Federspeicherzylinders mit dem Nehmerkolben, die gerade verhindern soll, daß im normalen Betriebsfall der Federspeicherzylinder irgendwelche Auswirkungen auf die Lenkung hat, läßt sich in weiterer Ausbildung der Erfindung besonders einfach dadurch erreichen, daß die Kolbenstange des Federspeicherzylinders in eine Längsbohrung des Nehmerkolbens, bzw. ein Verbindungsrohr zum zweiten Spurhebel, einragt, wobei ein erweitertes inneres Kopfstück im Betrieb in Abstand von einer in die Bohrung einragenden Buchse sich befindet. Erst beim Entlüften des Federspeicherzylinders gelangt durch die Verschiebung seines Kolbens das Kopfstück in Anschlag mit der Buchse und zieht diese und damit auch den Kolben des Nehmerzylinders und über diesen den damit verbindenden nach außen geschwenkten Spurhebel in die Lenkungsmittelstellung.

Der Vorratsdruckspeicher für Leckölverluste kann selbstverständlich nicht einen völligen Bruch in einer Hydraulikleitung abfangen, so daß für diesen Fall, bzw. auch für Fälle, in denen ohne einen solchen Bruch der Druck im Speicher unter ca. 5 bar abfällt, eine entsprechende Sicherheitsvorkehrung getroffen werden muß, da ja dann die hydraulische Lenkung für die Zusatzachse nicht mehr zufriedenstellend, wenn überhaupt noch, funktionieren kann. Zu diesem Zweck ist gemäß einem weiteren Merkmal der vorliegenden Erfindung vorgesehen, daß die beiden Kammern des Geberzylinders durch eine Verbindungsleitung gekoppelt sind, die über einen, durch Sicherheitsauslöseschalter, insbesondere einen Lecköldruckschalter, betätigbaren Steuerkolben freigebbar ist, der durch Druckluft gegen die Wirkung einer Feder in die Schließstellung verschiebbar ist, wobei die Federdruckspeicher und die Luftkammer des Steuerkolbens gemeinsam über ein Umschaltventil an eine Druckluftquelle, bzw. an die Atmosphäre anschließbar sind.

Ausgelöst durch eine starke Minderung des Vorratsdrucks im Speicher schaltet der Lecköl-Druckschalter das Umschaltventil und entlüftet damit sowohl die Luftkammer des Steuerkolbens, als auch die Federdruckspeicher. Dies bedeutet, daß über die Federdruckspeicher die Lenkachse sofort in die Geradeausfahrstellung verbracht wird, während durch das Öffnen der Verbindungsleitung zwischen den beiden Kammern des Geberzylinders dieser völlig unwirksam wird, da eine Verschiebung seines Kolbens keinerlei Auswirkung mehr auf den Nehmerzylinder haben kann.

Diese erfindungsgemäße Ausbildung führt ersichtlich auch dazu, daß bei einem irgendwiegearteten Ausfall des Druckluftsystems in gleicher Weise neben der Geradeausstellung der Zusatzachse die freie Lenkbewegung gewährleistet ist, d.h. die Bewegungen des Lenkstockhebels auf den Geberzylinder nur zu einer freien Verschiebung des Geberzylinderkolbens führen. Die Ausbildung des Steuerkolbens und seine Verkopplung mit dem Druckluftsystem der Federspeicherzylinder macht auch die Integrierung weiterer Sicherheitseinrichtungen sehr einfach möglich, indem nämlich beispielsweise das Umschaltventil durch die Betätigung der Achslifteinrichtung zwangsgeschaltet wird, da ja auch in diesem Fall ein Abstellen der Steuerung für die angehobene und damit ja nicht mehr wirksame Achse erforderlich ist. Diese Zwangsschaltung des Umschaltventils mit der Betätigung der Achslifteinrichtung kann am einfachsten dadurch erfolgen, daß das Umschaltventil mit einem Ventil für das Liften der Zwangsachse zwangsgekoppelt ist.

Wird die Zusatzachse abgesenkt, d.h. in Fahrstellung gebracht, müssen die beiden Federspeicherzylinder und der Geberzylinder belüftet werden. Um dabei allerdings zu vermeiden, daß dies geschieht, wenn die eigentliche Lenkachse des Fahrzeugs eingeschlagen ist, während ja die Zusatzachse beim Absenken immer in der Geradeausfahrstellung ist, ist in Weiterbildung der Erfindung eine Schaltvorrichtung vorgesehen, die nur in der Mittelstellung des Geberzylinderskolbens (Geradeausfahrstellung) das Wiederanschalten des Umschaltventils an die Druckluftquelle ermöglicht, was besonders einfach dadurch erfolgen kann, daß die Schaltvorrichtung einen im Ansteuerstromkreis des Umschaltventils liegenden berührungslosen Schalter aufweist, der in der Mittelstellung des Geberzylinderkolbens geschlossen ist.

Erst in dem Moment, in dem gerade die eigentliche Lenkachse nach einem Absenken der Zusatzachse in die Geradeausstellung gelangt oder auch nur durch diese hindurchschwenkt, wird über die entsprechende Schaltvorrichtung der Geberzylinder und die Federspeicherzylinder belüftet, was im Sekundenbruchteilbereich abläuft, so daß auf diese Art und Weise tatsächlich gewährleistet ist, daß die Lenkachse und die durch die hydraulische Lenkung mitgesteuerte Zusatzachse stets die gleiche Lenkstellung aufweisen.

Zur Freigebung einer Verbindungsleitung zwischen den beiden Kammern des Geberzylinders durch den Steuerkolben kann in besonders einfacher Weise vorgesehen sein, daß der Steuerkolben in einer über radiale Stichbohrungen mit den Kammern verbundenen Längsbohrung des Geberzylinderkolbens verschiebbar gelagert ist, wobei es schließlich im Rahmen der Erfindung liegt, die Ausbildung so zu treffen, daß der mit einer Querbohrung und einer davon ausgehenden zum freien Stirnende verlaufenden Stichbohrung versehene Steuerkolben zwischen einer ersten Arbeitsstellung, in der er die Verbindung zwischen den Kammern sperrt und gleichzeitig die in die Längsbohrung einmündende Ausgleichsleitung zum Vorratsdruckspeicher mit einer zwischen den Stichbohrungen zu den Kammern liegenden Verteilbohrung zu den im Geberzylinderkolben eingebauten Rückschlagventilen verbindet, und einer Ruheposition verstellbar ist, in der die Verbindungsleitung der Kammern geöffnet und die Verteilbohrung verschlossen ist.

Weitere Vorteile, Merkmale und Einzelheiten der Erfindung ergeben sich aus der nachfolgenden Beschreibung eines Ausführungsbeispiels anhand der Zeichnung. Dabei zeigen:
- Fig. 1: eine Wiedergabe der wesentlichen Funktionsteile einer erfindungsgemäßen hydraulischen Lenkung in der Betriebsstellung bei Geradeausfahrt,
- Fig. 2: einen Schnitt durch den Geberzylinder in der Nichtbetriebs- bzw. Sicherungsstellung bei entlüftetem Steuerkolben, und
- Fig. 3: eine der Fig. 3 entsprechende Darstellung der wesentlichen Funktionsteile bei einer abgewandelten Ausführungsform mit noch stärkerer Vernetzung der unterschiedlichen Sicherungsorgane.

In den beiden Figuren, in denen die eigentlichen Steuerleitungen, d.h. sowohl die Hydraulikleitungen für das Lecköl, wie auch für die Druckluft, nur als einfache Strichlinien angedeutet sind, bezeichnet 1 ein Lenkgetriebe eines Lkw, dessen Lenkstockhebel 2 wie üblich mit der Vorderachse verbunden ist. Dies ist in der Zeichnung durch einen Verbindungshebel 3 zur Vorderachse angedeutet. Vom Lenkstockhebel 2 geht auch ein Verbindungshebel 4 ab, der mit dem Kolben 5 eines Geberzylinders 6 verbunden ist, dessen beide mit Lecköl gefüllte Kammern 7 bzw. 8 durch Hydraulikleitungen 9 und 10 mit den Kammern 11 und 12 des Nehmerzylinders 13 verbunden sind, der mit Hilfe einer kardanischen Aufhängung 14 auf einer hydraulisch zu steuernden Zusatzachse 15 (Nach- bzw. Vorlaufachse) aufgehängt ist. Der Kolben 16 des Nehmerzylinders ist durch die rohrförmige Kolbenstange 17 direkt mit einem der Spurhebel 18 für das Rad 19 der Zusatzachse 15 gekoppelt, während der zweite Spurhebel 20 für das Rad 21 durch die nicht dargestellte, die beiden Spurhebel 18 und 20 verbindende Spurstange zwangsläufig mit der Betätigung des Spurhebels 18 mitverschwenkt wird.

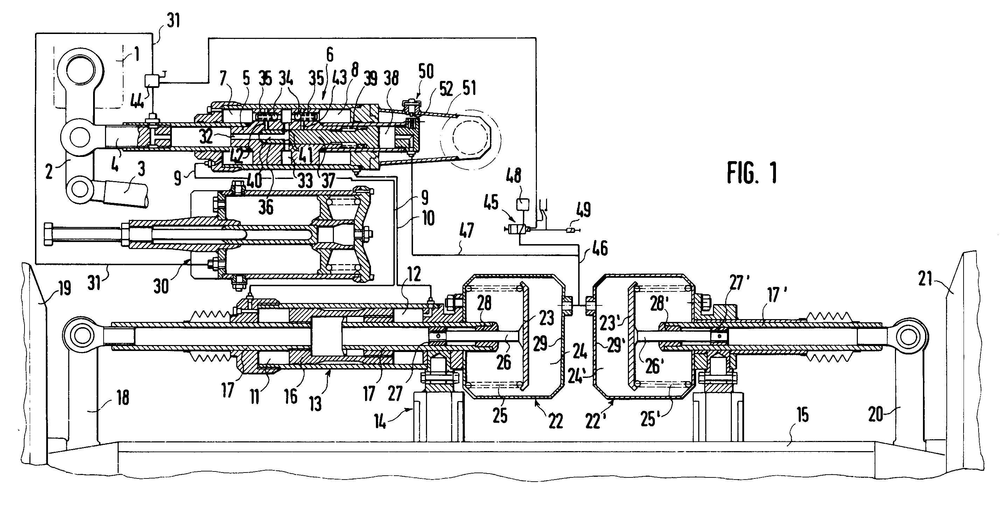

Dem Nehmerzylinder - und in gleicher Weise auch dem nur indirekt zwangsweise mitgelenktem Spurhebel 20 - ist jeweils ein Federdruckspeicher 22, 22' zugeordnet, in welchem ein Kolben 23, 23' unter der Wirkung von Druckluft im Raum 24, 24' gegen die Wirkung einer Feder 25, 25' in eine, in Fig. 1 gezeigte Arbeitsposition gebracht wird. Der Kolben 23, 23' weist eine Kolbenstange 26, 26' auf, die entweder in den dem Federspeicher zugekehrten Teil der beidseitig vom Kolben 16 sich erstreckenden Kolbenstange 17 des Nehmerzylinders, oder aber in ein Verbindungsrohr 17' zum zweiten Spurhebel 20 einragt. Die Verbindung ist dabei spielbehaftet ausgebildet, indem ein verbreiterter Kopf 27, 27' der Kolbenstange 26, 26' des Federspeicherzylinders 22, 22' in Abstand von einer als Führungsbuchse ausgebildeten Endbuchse 28, 28' angeordnet ist, wenn der Federdruckspeicher in der in Fig. 1 gezeigten Betriebsposition sich befindet. Die Abmessungen sind dabei so getroffen, daß bei entlüfteten Kammern 24, 24' der dann durch die Feder 25, 25' in die Endstellung verschobene Kolben 23, 23' über den Kopf 27, 27' und das Anschlagstück 28, 28' den zugehörigen Spurhebel 18 bzw. 20 genau in die Geradeausfahrstellung bringt, wie sie auch in Fig. 1 gezeigt ist. Dies bedeutet, daß der Abstand des Kolbens 23, 23' von der Wand 29, 29' genau dem Abstand zwischen dem Kopf 27, 27 und dem Anschlagstück 28, 28' entspricht.

Bei 30 ist ein Vorratsdruckzylinder für Hydrauliköl angedeutet, der über eine Verbindungsleitung 31 und eine Bohrung 32 im Geberzylinderkolben 5 in Verbindung mit einer Ringkammer 33 steht, von der aus mit Rückschlagventilen 34 versehene Verbindungsleitungen 35 zu den Kammern 7 und 8 führen, um etwaige Leckölverluste durch in der Praxis unvermeidbar tropfende Dichtungen od.dgl. ausgleichen zu können. Durch die gleichzeitige Zuführung der Leckölverluste zu beiden Kammern 7 und 8 bleibt dieser Leckölausgleich für die Betätigung und Verschiebung des Geberzylinderkolbens ohne Auswirkungen.

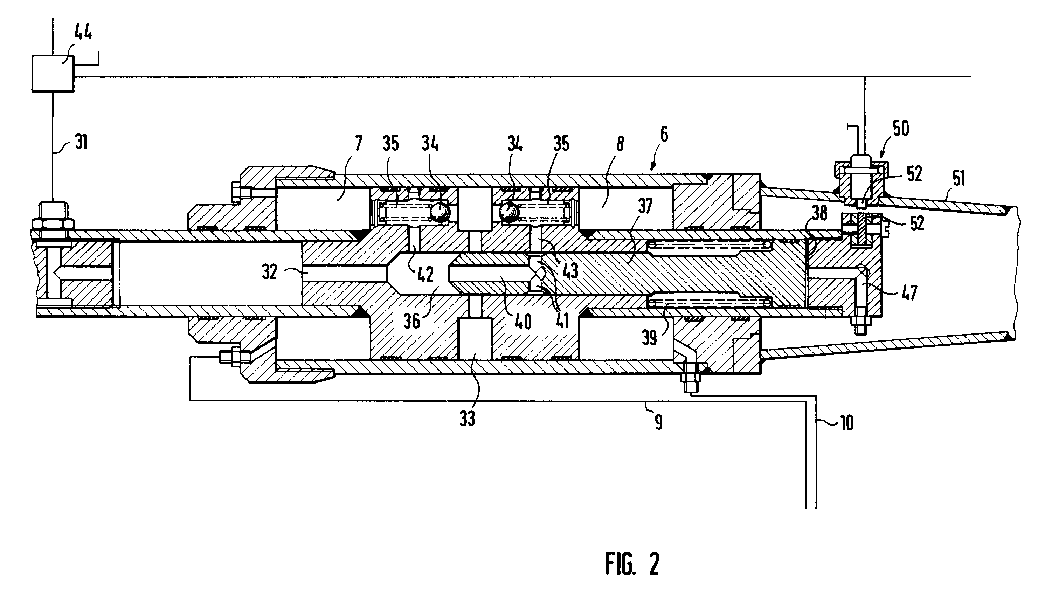

In einer Längsbohrung 36 des Geberzylinderkolbens 5 ist ein Steuerkolben 37 gelagert, der unter der Wirkung von Druckluft in der Kammer 38 gegen die Wirkung einer Feder 39 in die in Fig. 1 gezeigte Betriebsstellung verschoben gehalten ist, in welcher eine Längsbohrung 40 und daran sich anschließende radiale Stichbohrungen 41 im Steuerkolben die Leitung 32 im Geberzylinderkolben mit dem Ringraum 33 verbinden. Bei einem zu starken Druckabfall bzw. wenn aus sonstigen Gründen die hydraulische Lenkung abgeschaltet werden soll, was weiter unten noch im einzelnen näher beschrieben werden soll, wird durch Entlüftung des Druckluftraums 38 der Steuerkolben 37 unter der Wirkung der Feder 39 nach rechts in die in Fig. 2 gezeigte Stellung verschoben, so daß die Bohrungen 40, 41 des Steuerkolbens nunmehr die beiden Kammern des Geberzylinders über radial Stichbohrungen 42 und 43 des Geberzylinderkolbens 5 miteinander verbinden.

Durch diese unmittelbare Verbindung der links- und rechtsseitigen Hydraulikräume 7 und 8 des Geberzylinders erfolgt beim Verschieben des Geberzylinderkolbens 5 unter der Wirkung der Verschwenkung des Lenkstockhebels 2 keinerlei Hydraulikölverschiebung über die Leitungen 9 und 10 mehr, so daß damit auch keine Auswirkung auf den Nehmerzylinder 13 mehr stattfindet und somit die hydraulische Lenkung vollständig abgeschaltet ist, obgleich selbstverständlich die eigentliche Lenkung zur Vorderachse nach wie vor arbeitet und die Verkopplung zwischen dem Lenkstockhebel und dem Geberzylinderkolben ja auch nach wie vor bestehen bleibt.

Die erfindungsgemäße hydraulische Lenkung beinhaltet eine Reihe von Sicherheitsfaktoren, die bei einem Ausfall einzelner Systemteile Fehlsteuerungen und ein fehlerhaftes Arbeiten der Lenkung der Zusatzachse 15 verhindern. So ist zunächst ein Druckschalter 44 vorgesehen, der im Ansteuerstromkreis eines Umschaltventils 45 liegt und bei einem zu starken Druckabfall im Lecköl-Hydrauliksystem, beispielsweise unter 5 bar, das Umschaltventil 45 aus der in Fig. 1 gezeigten Stellung, in welcher es über Leitungen 46 und 47 die Luftkammern 24, 24' der Federspeicherzylinder bzw. den Luftdruckraum 38 des Steuerkolbens 37 mit einer Druckluftquelle 48 verbindet, in eine Entlüftungsstellung umschaltet, in der die Luftdruckquelle 48 abgeschaltet ist. Dabei werden sowohl die Kammern 24, 24' als auch die Kammer 38 entlüftet, was zur Folge hat, daß die Federdruckspeicher 22, 22' durch Verschiebung der Kolben 23, 23' die Spurhebel 18, 20 in die Geradeausfahrstellung verbringen und gleichzeitig der Geberzylinder in die Leerlaufstellung mit freiverschiebbarem Kolben gelangt, in der die Lenkbewegungen des Lenkstockhebels 2 für die Hydraulik keine Veränderungen mehr bewirken.

Das Umschaltventil 45 ist darüber hinaus zwangsweise mit einem Ventil 49 der Liftvorrichtung für die Zusatzachse 15 verbunden, so daß auch automatisch bei einem Liften der Zusatzachse 15 die genannte Entlüftung der Federdruckspeicher und des Steuerzylinders 37 erfolgt.

Im Ansteuerstromkreis für das Umschaltventil 45 liegt ein berührungsloser Schalter 50, der ein starr mit dem Gehäuse 51 des Geberzylinders verbundenes Teil und ein mit dem Geberzylinderkolben 5 verbundenes bewegliches Teil 52 umfaßt, welches genau in der in Fig. 1 gezeigten Mittelstellung dem starren Teil gegenüberliegt, so daß in dieser Stellung der berührungslose Schalter 50 "geschlossen" ist. Nur in dieser Schließstellung ist eine Betätigung des Umschaltventils 45 möglich, da ansonsten dieser Schalter 50 den Ansteuerstromkreis unterbricht. Auf diese Art und Weise wird sichergestellt, daß bei einem Absenken der Zusatzachse 15, das stets in Geradeausfahrstellung der Räder 19, 21 erfolgt, die hydraulische Steuerung erst in dem Moment wieder durch Belüften der Kammern 24, 24', 38 eingeschaltet wird, wenn die Räder der gelenkten Vorderachse sich ebenfalls in Geradeausfahrstellung befinden.

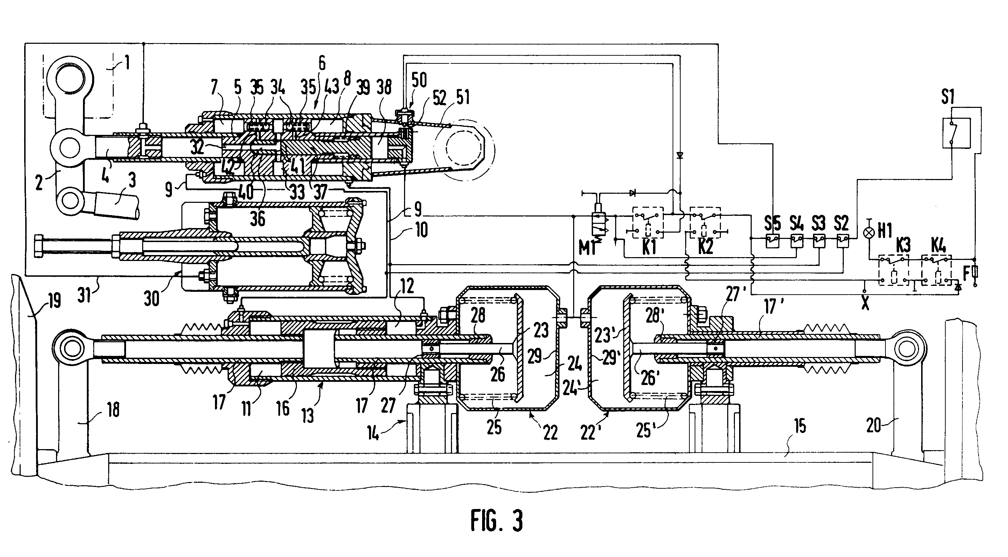

Die Fig. 3 zeigt die gleiche Anordnung wie die Fig. 1, doch weist sie eine noch stärkere Vernetzung der unterschiedlichen Sicherungseinrichtungen auf.

Dabei bedeutet S1 einen Zugschalter für die Ölfüllmenge, S2 einen Überdruckschalter für den Lenkkreis links, S3 einen Überdruckschalter für den Lenkreis rechts, S4 einen Druckschalter für den Luftvorrat (5,5 bar), S5 einen Druckschalter für den Ölspeichervordruck (2 bar), K1 ein Relais mit Selbsthalteschaltung für ein Magnetventil, K2 ein Relais für die Liftachsenansteuerung, K3 ein Relais für die Störlampensteuerung, ebenso wie K4, das ebenfalls ein Relais für die Störlampensteuerung bezeichnet. H1 ist die Störlampe, M1 das Magnetventil Luft, F eine Sicherung und X die Ansteuerung der Liftachse.

## Patentansprüche

1. Hydraulische Lenkung, insbesondere für Vor- oder Nachlaufachsen von Lkws, mit einem zweikammerigen Geberzylinder (6), dessen Kolben (5) an den Lenkstockhebel (2) angeschlossen ist und dessen beide Kammern (7, 8) über Hydraulikleitungen (9, 10) mit den Kammern (11, 12) eines an der Lenkachse vorzugsweise kardanisch aufgehängten Nehmerzylinders (13) verbunden sind, wobei der Nehmerzylinder (13) einem der beiden Spurhebel (18, 20) der Lenkachse (15) zugeordnet ist und die beiden Spurhebel (18, 20) über eine Spurstange miteinander verbunden sind und ein federbeaufschlagter Vorratsdruckspeicher (30) für Leckölverluste vorgesehen ist, der über Rückschlagventile (34) mit dem Hydrauliksystem von Geber- und Nehmerzylinder verbunden ist, dadurch gekennzeichnet, daß dem Nehmerzylinder (13) und dem zwangsweise mitgelenkten zweiten Spurhebel jeweils ein Federspeicherzylinder (22, 22') zugeordnet ist, dessen unter Spiel mit dem Nehmerkolben (16) beziehungsweise mit einem Verbindungsrohr (17') zum zweiten Spurhebel gekoppelter Kolben (23, 23') unter der Wirkung einer Feder (25, 25') den Nehmerkolben (16) oder das Verbindungsrohr (17') in die Lenkungsmittelstellung verbringt, wenn der steuerbare Luftdruck abfällt, der im Betrieb den Kolben (23, 23') des Federspeicherzylinders (22, 22') in einer Stellung hält, in der aufgrund des Spiels der Nehmerkolben (16) und das Verbindungsrohr (17') unbeeinflußt verschiebbar sind.

2. Hydraulische Lenkung nach Anspruch 1, dadurch gekennzeichnet, daß nur einem der beiden Spurhebel (18) der Lenkachse (15) ein Nehmerzylinder (13) zugeordnet ist und daß der über eine Spurstange mit diesem ersten Spurhebel (18) verbundene zweite Spurhebel (20) mit Spiel mit der Kolbenstange (26') eines gesonderten Federspeicherzylinders (22') verbunden ist, durch den er in die Lenkungsmittelstellung verbringbar ist.

3. Hydraulische Lenkung nach Anspruch 1 oder 2, dadurch gekennzeichnet, daß die Kolbenstange (26, 26') des Federspeicherzylinders (22, 22') in eine Längsbohrung der Nehmerkolbenstange (17), bzw. ein Verbindungsrohr (17') zum zweiten Spurhebel (20), einragt, wobei ein erweitertes inneres Kopfstück (27, 27') im Betrieb in Abstand von einer in die Bohrung einragenden Endbuchse (28, 28') sich befindet.

4. Hydraulische Lenkung nach einem der Ansprüche 1 bis 3, dadurch gekennzeichnet, daß die beiden Kammern (7, 8) des Geberzylinders (6) durch eine Verbindungsleitung gekoppelt sind, die durch einen durch Sicherheitsauslöseschalter, insbesondere einen Lecköl-Druckschalter (44), betätigbaren Steuerkolben (37) freigebbar ist, der durch Druckluft gegen die Wirkung einer Feder (39) in die Schließstellung der Verbindungsleitung verschiebbar ist, wobei die Federspeicherzylinder (22, 22') und die Luftkammer (38) des Steuerkolbens (37) gemeinsam über ein Umschaltventil (45) an eine Druckluftquelle (48) bzw. an die Atmosphäre anschließbar sind.

5. Hydraulische Lenkung nach Anspruch 4, dadurch gekennzeichnet, daß das Umschaltventil (45) mit einem Ventil (49) für das Liften der Lenkachse (15) zwangsgekoppelt ist.

6. Hydraulische Lenkung nach Anspruch 4 oder 5, gekennzeichnet durch eine Schaltvorrichtung, die nur in der Mittelstellung des Geberzylinderkolbens (5) (Geradeausfahrstellung) das Wiederanschalten des Umschaltventils (45) an die Druckluftquelle (48) ermöglicht.

7. Hydraulische Lenkung nach Anspruch 6, dadurch gekennzeichnet, daß die Schaltvorrichtung einen im Ansteuerstromkreis des Umschaltventils (45) liegenden berührungslosen Schalter (50) aufweist, der in der Mittelstellung des Geberzylinderkolbens (5) geschlossen ist.

8. Hydraulische Lenkung nach Anspruch 4 bis 7, dadurch gekennzeichnet, daß der Steuerkolben (37) in einer über radiale Stichbohrungen (42, 43) mit den Kammern (7, 8) verbundenen Längsbohrung (36) des Geberzylinderkolbens (5) verschiebbar gelagert ist.

9. Hydraulische Lenkung nach Anspruch 8, dadurch gekennzeichnet, daß der mit einer Querbohrung (41) und einer davon ausgehenden zum freien Stirnende verlaufenden Stichbohrung (40) versehene Steuerkolben (37) zwischen einer ersten Arbeitsstellung, in der er die Verbindung zwischen den Kammern (7, 8) sperrt und gleichzeitig die in die Längsbohrung (36) einmündende Ausgleichsleitung (31) zum Vorratsdruckspeicher (30) mit einer zwischen den Stichbohrungen (42, 43) zu den Kammern (7, 8) liegenden Verteilbohrung (33) zu den im Geberzylinderkolben (5) eingebauten Rückschlagventilen (34) verbindet, und einer Ruheposition verstellbar ist, in der die Verbindungsleitung der Kammern (7, 8) geöffnet und die Verteilbohrung (33) verschlossen ist.

## Claims

1. Hydraulic steering, in particular for front or rear axes of heavy goods vehicles, having a double-cylinder master cylinder (6), whose piston (5) is connected to the steering lever (2) and whose two chambers (7, 8) are connected via pressure medium lines (9, 10) to the chambers (11, 12) of a slave cylinder (13) mounted preferably by a universal joint on the steering axle, wherein the slave cylinder (13) has one of the two track rod levers (18, 20) of the steering axle (15) allocated thereto and both track rod levers (18, 20) are connected together via a track rod and wherein a spring-loaded supply pressure reservoir (30) for leaked oil losses is provided, which is connected via non-return valves (34) to the hydraulic system of the master cylinder and slave cylinder, characterised in that the slave cylinder (13) and the second track rod lever compulsorily coupled thereto each have a spring-loaded cylinder (22, 22'), whose piston (23, 23'), coupled with play to the slave cylinder (16) or its connecting tube (17') to the second track rod lever, moves the slave piston (16) or connecting tube (17') into the steering middle position under the action of a spring (25, 25') if there is a drop in the controllable air pressure keeping the piston (33, 23') of the spring-loaded cylinder (22, 22') in a position during operation in which, due to the available play, the slave piston (16) and the connecting tube (17') are displaceable without being modified.

2. Hydraulic steering according to claim 1, characterised in that a slave cylinder (13) is only allocated to one of the two track rod levers (18) of the steering axle (15) and in that the second track rod lever (20) connected to the first track rod lever (18) via a track rod is connected with play to the piston rod (26') of a separate spring-loaded cylinder (22'), whereby said lever can be moved into the steering middle position.

3. Hydraulic steering according to claim 1 or 2, characterised in that the piston rod (26, 26') of the spring-loaded cylinder (22, 22') projects into a longitudinal bore of the slave piston rod (17) or a connecting tube (17') to the second track rod lever (20), and an expanded inner head member (27, 27') is positioned during operation with clearance from an end bush (28, 28') projecting into the bore.

4. Hydraulic steering according to one of claims 1 to 3, characterised in that the two chambers (7, 8) of the master cylinder (6) are coupled by a connecting line, which is releasable by a control piston (37) actuatable by a safety trip switch, in particular a leaked oil pressure switch (44), said control piston being displaceable by compressed air against the action of a spring (39) into the closed position of the connecting line, the spring-loaded cylinder (22, 22') and the air chamber (38) of the control piston (37) being connectable to a compressed air source (48) or to the atmosphere via a common reversing valve (45).

5. Hydraulic steering according to claim 4, characterised in that the reversing valve (45) is compulsorily coupled to a valve (49) for lifting the steering axle (15).

6. Hydraulic steering according to claim 4 or 5, characterised by a switching device which permits reconnection of the reversing valve (45) to the compressed air source (48) only in the middle position (for traveling straight ahead) of the master cylinder piston (5).

7. Hydraulic steering according to claim 6, characterised in that the switching device has a contactless switch (50) which lies in the control circuit of the reversing valve (45) and which is closed in the middle position of the master cylinder piston (5).

8. Hydraulic steering according to claim 4 to 7, characterised in that the control piston (37) is displaceably mounted in a longitudinal bore (36) of the master cylinder piston (5), which bore is connected to the chambers (7, 8) via radial tap bores (42, 43).

9. Hydraulic steering according to claim 8, characterised in that the control piston (37) provided with a transverse bore (41) and a tap bore (40) branching off from the transverse bore (41) and extending to the free front end is displaceable between a first working position - in which it locks the connection between the chambers (7, 8) and at the same time connects the equalising line (31) leading to the supply pressure reservoir (30) and opening into the longitudinal bore (36) to a distribution bore (33), which leads to the non-return valves (34) incorporated in the master cylinder piston (5) and lies between the tap bores (42, 43) leading to the chambers (7, 8) - and a rest position, in which the connecting line of the chambers (7, 8) is open and the distribution bore (33) is closed.

## Revendications

1. Direction hydraulique, notamment pour l'essieu avant ou arrière de poids lourds, comportant un maître-cylindre (6) à deux chambres, dont le piston (5) est raccordé au levier de commande de direction (2) et dont les deux chambres (7,8) sont reliées par l'intermédiaire de canalisations hydrauliques (9,10) aux chambres (11,12) d'un cylindre récepteur (13), qui est, de préférence, suspendu à la cardan à l'axe de la direction, et dans laquelle le cylindre récepteur (13) est associé à l'un des deux leviers d'accouplement (18,20) de l'axe de direction (15) et les deux leviers d'accouplement (18,20) sont reliés entre eux par l'intermédiaire d'une barre d'accouplement, et il est prévu un accumulateur de pression de réserve (30) pour des pertes d'huile de fuite, chargé par un ressort et qui est relié, par l'intermédiaire de soupapes antiretour (34), au système hydraulique du maître-cylindre et du cylindre récepteur, caractérisée en ce qu'au cylindre récepteur (13) et au second levier d'accouplement, qui est articulé simultanément selon une liaison imposée, est associé respectivement un cylindre accumulateur à ressort (22,22'), dont le piston (23,23'), qui est accouplé avec jeu au piston récepteur (16) ou à un tube de liaison (17') raccordé au second levier d'accouplement, place le piston récepteur (16) ou le tube de liaison (17') dans la position centrale de la direction, sous l'action d'un ressort (25,25'), dans le cas d'une diminution de la pression d'air commandable, qui, en fonctionnement, maintient le piston (23,23') du cylindre accumulateur à ressort (22,22') dans une position, dans laquelle, en raison du jeu, le piston récepteur (16) et le tube de liaison (17') sont déplaçables sans être influencés.

2. Direction hydraulique selon la revendication 1, caractérisée en ce qu'un cylindre récepteur (13) est associé uniquement à l'un des deux leviers d'accouplement (18) de l'axe de direction (15) et que le second levier d'accouplement (20), qui est relié par l'intermédiaire d'une barre d'accouplement à ce premier levier d'accouplement (18), est relié avec jeu à la tige de piston (26') d'un cylindre accumulateur à ressort particulier (22'), au moyen duquel il peut être amené dans la position centrale de la direction.

3. Direction hydraulique selon la revendication 1 ou 2, caractérisée en ce que la tige de piston (26,26') du cylindre accumulateur à ressort (22,22') pénètre dans un perçage longitudinal dans la tige (17) du piston récepteur, ou dans un tube de liaison (17') relié au second levier d'accouplement (20), un élément de tête intérieur élargi (27,27') étant situé, pendant le fonctionnement, à distance d'une douille d'extrémité (28,28') qui pénètre dans le perçage.

4. Direction hydraulique selon l'une quelconque des revendications 1 à 3, caractérisée en ce que les deux chambres (7,8) du maître-cylindre (6) sont couplées par l'intermédiaire d'une canalisation de liaison, qui peut être libérée par un piston de commande (37) pouvant être actionné par un commutateur de déclenchement de sécurité, notamment un commutateur de pression d'huile de fuite (44), et qui peut être amené, sous l'effet de l'air comprimé et à l'encontre de l'action d'un ressort (39), dans la position de fermeture de la canalisation de liaison, le cylindre accumulateur à ressort (22,22') et la chambre d'air (38) du piston de commande (37) pouvant être raccordés conjointement, par l'intermédiaire d'une soupape de commutation (45), à une source d'air comprimé (48) ou à l'atmosphère.

5. Direction hydraulique selon la revendication 4, caractérisée en ce que la soupape de commutation (45) est accouplée de façon imposée à une soupape (49) pour le soulèvement de l'axe de direction (15).

6. Direction hydraulique selon la revendication 4 ou 5, caractérisée par un dispositif de commutation, qui permet un nouveau raccordement de la soupape de commutation (45) de la source d'air comprimé (48), uniquement lorsque le piston (5) du maître-cylindre est dans la position médiane (position de conduite en ligne droite).

7. Direction hydraulique selon la revendication 6, caractérisée en ce que le dispositif de commutation possède un commutateur (50) sans contact, qui est situé dans le circuit de commande de la soupape de commutation (45) et qui est fermé lorsque le piston (5) du maître-cylindre est dans la position médiane.

8. Direction hydraulique selon les revendications 4 à 7, caractérisée en ce que le piston de commande (37) est monté de manière à être déplaçable dans un perçage longitudinal (36), qui est relié aux chambres (7,8) par l'intermédiaire de perçages radiaux (42,43), du piston (5) du maître-cylindre.

9. Direction hydraulique selon la revendication 8, caractérisée en ce que le piston de commande (37), qui est pourvu d'un perçage transversal (41) et d'un perçage (40) qui s'étend à partir du précédent en direction de l'extrémité frontale libre, peut être déplacé entre une première position de travail, dans laquelle il interrompt la liaison entre les chambres (7,8) et relie simultanément la canalisation de compensation (31), qui débouche dans le perçage longitudinal (36), et est raccordé à l'accumulateur de pression de réserve (30), un perçage de distribution (33), qui est situé entre les perçages (42,43) aboutissant aux chambres (7,8) et qui aboutit aux soupapes antiretour (34) montées dans le piston (5) du maître-cylindre, et une position de repos, dans laquelle la canalisation de liaison des chambres (7,8) est ouverte et le perçage de distribution (33) est fermé.
